# EUROPEAN PATENT APPLICATION

(11) **EP 2 237 293 A2**
(43) Date of publication of application: **06.10.2010**
(21) Application number: 10156697.4
(22) Date of filing: 17.03.2010
(51) Int. Cl.: H01G 9/20

(54) **Photoelectric conversion device and manufacturing method of the same**

(30) Priority: 30.03.2009 JP 2009082549
(71) Applicant: TDK Corporation, Tokyo 103-8272 (JP)
(72) Inventor: Tsuchiya, Masahiro, Tokyo 103-8272 (JP); Murai, Miki, Tokyo 103-8272 (JP); Handa, Tokuhiko, Tokyo 103-8272 (JP); Shinkai, Masahiro, Tokyo 103-8272 (JP)
(74) Representative: Grünecker, Kinkeldey, Stockmair & Schwanhäusser Anwaltssozietät

(57) **Abstract**

To provide a photoelectric conversion device that has excellent photoelectric conversion efficiency and enhanced reliability without wide variations in performance. A manufacturing method of a photoelectric conversion device that includes a working electrode having a dye-supported metal oxide layer, a counter electrode disposed so as to face the working electrode, and an electrolyte layer enclosed between the working electrode and the counter electrode, includes: a step of preparing an electrolyte sheet in which an electrolyte is retained by a reticulated support member; and a step of enclosing the electrolyte sheet between the working electrode and the counter electrode.

## Description

### BACKGROUND OF THE INVENTION

### Field of the Invention

The present invention relates to a photoelectric conversion device and a manufacturing method of the photoelectric conversion device.

### Description of the Related Art

In recent years, solar photovoltaic power generation has received attention as one of promising means for solving environmental problems as typified by exhaustion of fossil fuel resources and reduction of carbon dioxide emissions. As typical examples of solar cells, single-crystalline and polycrystalline silicon-based solar cells are widely known and have already been put on the market. In this technical field, however, fears of short supply of silicon as a main raw material are growing recently, and practical utilization of a non-silicon-based solar cell (e.g., CuInGaSe₂ (CIGS) or the like) of the next generation is much desired.

As such a non-silicon-based solar cell, a dye-sensitized solar cell published by Gratzel et al. in 1991 has especially received attention as an organic solar cell capable of realizing a conversion efficiency of 10% or more. Recently, application, development, and research of the solar cell are actively performed in various research organizations at home and abroad. This dye-sensitized solar cell has a basic structure in which a solution system electrolyte (electrolyte solution) is enclosed between a metal oxide electrode to which a sensitizing dye is adsorbed and a counter electrode disposed so as to face the metal oxide electrode.

However, when the solution system electrolyte is used, there is a risk that liquid leakage occurs during manufacture or upon cell damage, causing decreases in safety and durability. To prevent such liquid leakage, technical development of a dye-sensitized photoelectric conversion device having a solidified or gelled electrolyte is underway.

For example, Patent Documents 1 and 2 disclose a dye-sensitized photoelectric conversion device in which a gel electrolyte composition containing an ionic liquid and conductive particles or cup-stacked carbon nanotubes as main components is dropped onto an oxide semiconductor porous film to form an electrolyte layer, and then a counter electrode is overlaid and pressed on the electrolyte layer to manufacture a cell. Likewise, Patent Document 3 discloses a dye-sensitized photoelectric conversion device in which a solid mixture containing 1 to 5% by mass a p-type conductive polymer, 5 to 50% by mass a carbon material, and 20 to 85% by mass an ionic liquid is caused to adhere onto a photoelectrode layer and the solid mixture and the photoelectrode layer are pressed together to form a charge transport layer, and then a counter electrode is attached onto the charge transport layer by a pressure to manufacture a cell.

Meanwhile, Patent Document 4 discloses a dye-sensitized photoelectric conversion device in which a first electrolyte layer is formed by impregnating a porous semiconductor layer to which a dye is adsorbed with a liquid electrolyte containing a molten salt or by forming a solid electrolyte containing a molten salt in a porous semiconductor layer, and a second electrolyte layer made of a solid electrolyte is formed on a surface of this porous semiconductor layer.

[Patent Document 1] Japanese Patent Application Laid-Open No. 2005-093075
[Patent Document 2] WO 2005/006482 Pamphlet
[Patent Document 3] Japanese Patent Application Laid-Open No. 2007-227087
[Patent Document 4] Japanese Patent Application Laid-Open No. 2006-302531

However, in the above-mentioned conventional techniques, it is difficult to form an electrolyte layer of a uniform thickness merely by dropping a high viscosity electrolyte composition on a metal oxide layer for coating. In view of this, in the above-mentioned conventional techniques, a process of pressing the high viscosity electrolyte composition on the metal oxide layer or the counter electrode is performed during electrolyte layer formation or cell manufacture. Despite this, uneven coating tends to occur, and the formation of an electrolyte layer of a uniform thickness is still difficult. Besides, the metal oxide layer can be damaged during pressing. It is difficult to form an electrolyte layer of a uniform thickness and a desired shape without damaging the metal oxide layer by such a pressing process. For example, a pretreatment such as masking a part where the electrolyte layer is not formed, and elaborate manufacturing control such as controlling an electrolyte composition coating condition (an amount of coating, uniform coating) and a pressure application condition (an amount of pressure, uniform surface pressure) according to a metal oxide layer strength, an electrolyte composition viscosity, and the like, are needed. Thus, the above-mentioned conventional techniques are inferior in productivity and economic efficiency due to a complex manufacturing process and a poor range of manufacturing conditions (process tolerance). Moreover, there is also a problem of wide variations in performance among obtained photoelectric conversion devices.

In the above-mentioned conventional techniques, the use of a (liquid) electrolyte composition of a low viscosity is contemplated, too. In this case, however, there is a risk that liquid leakage occurs during manufacture or upon cell damage, as in the case of a solution system electrolyte. Besides, it is difficult to obtain a photoelectric conversion device having sufficient safety and durability easily at low cost.

### SUMMARY OF THE INVENTION

The present invention has been developed in view of such a situation. An object of the present invention is to provide a photoelectric conversion device that has excellent photoelectric conversion efficiency and enhanced reliability without wide variations in performance, and a manufacturing method for manufacturing such a photoelectric conversion device easily at low cost with high reproducibility and stability.

As a result of repeating intensive study, the present inventors have found that the problems stated above can be solved by adopting an electrolyte sheet in which an electrolyte is retained by a reticulated support member, and completed the present invention.

That is, a manufacturing method of a photoelectric conversion device according to the present invention is a manufacturing method of a photoelectric conversion device comprising a working electrode having a dye-supported metal oxide layer, a counter electrode disposed so as to face the working electrode, and an electrolyte layer enclosed between the working electrode and the counter electrode, the manufacturing method including: a step of preparing an electrolyte sheet in which an electrolyte is retained by a reticulated support member; and a step of disposing the electrolyte sheet between the working electrode and the counter electrode.

As a result of measuring characteristics of a photoelectric conversion device obtained by the above-mentioned manufacturing method, the present inventors have found that the photoelectric conversion device exhibits significantly improved photoelectric conversion efficiency without wide variations in performance, as compared with the conventional techniques. Though details of a functional mechanism that contributes to such effects are still unclear, for example the following presumption can be made.

According to the above-mentioned manufacturing method, the electrolyte sheet in which the electrolyte layer is retained by the reticulated support member, that is, an electrolyte layer with enhanced dimensional accuracy, is enclosed between the working electrode and the counter electrode. This enables the electrolyte layer to be uniformly in tight contact with the working electrode and the counter electrode, with there being no need to perform excess pressing during electrolyte layer formation or cell manufacture as in the conventional techniques. Moreover, since such a pressing process required in the conventional techniques can be omitted, damage to the metal oxide layer can be prevented. Hence, a photoelectric conversion device having improved photoelectric conversion efficiency and enhanced reliability without wide variations in performance can be manufactured stably. In addition, according to the above-mentioned manufacturing method, a pretreatment such as masking can be omitted, and also elaborate manufacturing control is unnecessary. This contributes to a simplified manufacturing process and an increased process tolerance as compared with the conventional techniques, leading to improvements in productivity and economic efficiency. Furthermore, a thickness and a shape of the electrolyte sheet can be easily adjusted, so that the above-mentioned manufacturing method is widely applicable to various forms and exhibits excellent versatility. Note, however, that the function is not limited to such.

Moreover, it is preferable that the electrolyte is retained at least in reticulations of the reticulated support member. According to this, an electrolyte layer of a uniform thickness that is highly filled with an electrolyte can be realized easily at low cost.

Furthermore, it is preferable that the electrolyte is a quasi-solid electrolyte. In the case of using the quasi-solid electrolyte, the functional effects described above can be achieved more remarkably. In this specification, the term "quasi-solid" has a concept including not only a solid but also a gel solid or a clayey solid that shows almost no fluidity but is deformable by application of a stress. In detail, the term "quasi-solid" means a property of having no shape change or only a slight shape change under its own weight after being left standing for a predetermined time period.

In addition, it is preferable that the reticulated support member is a mesh sheet. According to this, further improvements in productivity and economic efficiency can be attained.

Moreover, an adhesive may be added to at least one part of the reticulated support member. According to this, electrolyte retentivity can be enhanced. Hence, an electrolyte sheet of a uniform thickness that is highly filled with an electrolyte can be realized easily at low cost.

Here, it is preferable that, in the step of preparing the electrolyte sheet, the electrolyte sheet in which the electrolyte is retained by the reticulated support member is formed by sandwiching the reticulated support member together with the electrolyte between one pair of substrates. According to this, a flat-surface electrolyte sheet of a uniform thickness that is highly filled with an electrolyte can be obtained easily at low cost. Moreover, even a high viscosity or high solid electrolyte that is unable to be coated by an ordinary coating machine can be formed into a film of a uniform thickness with high reproducibility. In addition, by manufacturing such an electrolyte sheet in which the electrolyte is retained by the reticulated support member in advance and placing the electrolyte sheet between the working electrode and the counter electrode, damage to the metal oxide layer can be prevented.

Alternatively, it is preferable that, in the step of preparing the electrolyte sheet, the electrolyte sheet in which the electrolyte is retained by the reticulated support member is formed by sandwiching the reticulated support member together with the electrolyte between one pair of substrates and then pulling out the reticulated support member from between the pair of substrates. According to this, a flat-surface electrolyte sheet of a uniform thickness that is more highly filled with an electrolyte can be obtained easily at low cost. Moreover, even a high viscosity or high solid electrolyte that is unable to be coated by an ordinary coating machine can be formed into a film of a uniform thickness with high reproducibility. In addition, by manufacturing such an electrolyte sheet in which the electrolyte is retained by the reticulated support member in advance and placing the electrolyte sheet between the working electrode and the counter electrode, damage to the metal oxide layer can be prevented.

Alternatively, it is preferable that, in the step of preparing the electrolyte sheet, the electrolyte sheet in which the electrolyte is retained by the reticulated support member is formed by pressing the electrolyte together with the reticulated support member on a substrate. According to this, a flat-surface electrolyte sheet of a uniform thickness that is highly filled with an electrolyte can also be obtained easily at low cost. Moreover, even a high viscosity or high solid electrolyte that is unable to be coated by an ordinary coating machine can be formed into a film of a uniform thickness with high reproducibility. In addition, by manufacturing such an electrolyte sheet in which the electrolyte is retained by the reticulated support member in advance and placing the electrolyte sheet between the working electrode and the counter electrode, damage to the metal oxide layer can be prevented.

Here, it is preferable that the substrate is a glass substrate, a plastic substrate, a metal or alloy substrate, or a laminate of these substrates. These substrates have poor adhesiveness to the electrolyte and the reticulated support member, so that a flat-surface electrolyte sheet of a uniform thickness that is highly filled with an electrolyte can be obtained easily at low cost.

On the other hand, a photoelectric conversion device according to the present invention is a photoelectric conversion device comprising: a working electrode having a dye-supported metal oxide layer; a counter electrode disposed so as to face the working electrode; and an electrolyte layer enclosed between the working electrode and the counter electrode, wherein the electrolyte layer comprises an electrolyte sheet in which an electrolyte is retained by a reticulated support member. By adopting such an electrolyte sheet of excellent dimensional accuracy, a photoelectric conversion device having improved photoelectric conversion efficiency and enhanced reliability without wide variations in performance can be realized easily at low cost.

According to the present invention, it is possible to realize a photoelectric conversion device that has excellent photoelectric conversion efficiency and enhanced reliability without wide variations in performance. Additionally, a simplified manufacturing process and an increased process tolerance contribute to improvements in productivity and economic efficiency. Furthermore, excellent versatility can be attained.

### BRIEF DESCRIPTION OF THE DRAWINGS

FIG. 1 is a sectional view showing a schematic structure of a photoelectric conversion device 100;
FIG. 2 is a process view showing a state of manufacturing the photoelectric conversion device 100;
FIG. 3 is a process view showing a state of manufacturing the photoelectric conversion device 100;
FIG. 4 is a process view showing a state of manufacturing the photoelectric conversion device 100;
FIG. 5 is a process view showing a state of manufacturing the photoelectric conversion device 100;
FIG. 6 is a process view showing a state of manufacturing an electrolyte sheet 31;
FIG. 7 is a process view showing a state of manufacturing the electrolyte sheet 31;
FIG. 8 is a process view showing a state of manufacturing the electrolyte sheet 31;
FIG. 9 is a process view showing a state of manufacturing the electrolyte sheet 31;
FIG. 10 is a process view showing a state of manufacturing the electrolyte sheet 31;
FIG. 11 is a process view showing a state of manufacturing the electrolyte sheet 31;
FIG. 12 is a process view showing a state of manufacturing the electrolyte sheet 31; and
FIG. 13 is a plan view showing electrolyte sheets and reticulated support members of Examples 1 and 2.

### DESCRIPTION OF THE PREFERRED EMBODIMENTS

The following describes an embodiment of the present invention. Note that the following embodiment is merely an example for describing the present invention, and the present invention is not limited only to the embodiment.

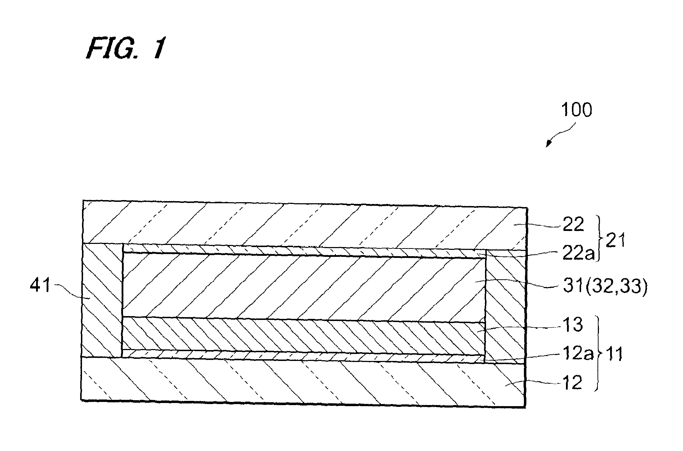

FIG. 1 is a sectional view showing a schematic structure of a photoelectric conversion device in this embodiment. A photoelectric conversion device 100 includes a working electrode 11, a counter electrode 21, and an electrolyte sheet 31 as an electrolyte layer enclosed between the working electrode 11 and the counter electrode 21. The working electrode 11 and the counter electrode 21 are disposed so as to face each other via a spacer 41, and the electrolyte sheet 31 is placed in a sealed space defined by the working electrode 11, the counter electrode 21, and the spacer 41.

The working electrode 11 has a metal oxide layer carrying a dye (a dye-supported metal oxide layer 13), on a conductive surface 12a of a base 12.

A type, a size, and a shape of the base 12 are not particularly limited so long as the base 12 is capable of supporting at least the metal oxide layer 13. For instance, a plate-like base or a sheet-like base is preferably used. Specific examples of the base 12 include a glass substrate, a plastic substrate such as polyethylene terephthalate, polyethylene, polypropylene, and polystyrene, a metal or alloy substrate, a ceramic substrate, and a laminate of these substrates. Moreover, the base 12 preferably has translucency, and more preferably has excellent translucency in a visible light region. Furthermore, the base 12 preferably has flexibility. Such flexibility allows structures of various forms to be provided.

The conductive surface 12a can be added to the base 12 by, for example, forming a transparent conductive film on the base 12 like a conductive PET film. The transparent conductive film is not particularly limited. Examples of the transparent conductive film include indium tin oxide (ITO), indium zinc oxide (IZO), SnO₂, InO₃, and FTO obtained by doping SnO₂ with fluorine. They may be used singly or in combination. As a formation method of the transparent conductive film, a known technique such as evaporation, CVD, spraying, spin coating, and dipping is applicable. A film thickness of the transparent conductive film can be set appropriately. Note that, by using the base 12 having conductivity, the process of adding the conductive surface 12a to the base 12 can be omitted. In addition, an appropriate surface modification treatment may be performed on the conductive surface 12a of the base 12 according to need. Specific examples of the treatment include a known surface treatment such as a degreasing treatment with a surfactant, an organic solvent, an aqueous alkaline solution, or the like, a mechanical polishing treatment, an immersion treatment in an aqueous solution, a preliminary electrolysis treatment with an electrolyte solution, a washing treatment, and a drying treatment.

The dye-supported metal oxide layer 13 is a composite structure in which a dye is carried by a porous metal oxide layer. The metal oxide layer is a porous semiconductor layer whose main component is a metal oxide such as TiO₂, ZnO, SnO₂, WO₃, and Nb₂O₅, and may contain a metal such as titanium, tin, zinc, iron, tungsten, zirconium, strontium, indium, cerium, vanadium, niobium, tantalum, cadmium, lead, antimony, and bismuth, a metal oxide of any of these metals, and a chalcogenide of any of these metals. A thickness of the metal oxide layer is not particularly limited, but is preferably 0.05 to 50 µm.

Examples of a method for forming the metal oxide layer include a method of providing a metal oxide dispersion liquid onto the conductive surface 12a of the base 12 and then performing sintering, a method of providing a metal oxide paste onto the conductive surface 12a of the base 12 and then performing a low temperature treatment of about 150°C, and a method of performing cathode electrolytic deposition on the conductive surface 12a of the base 12 from an electrolyte solution containing a metal salt.

The dye carried by the metal oxide layer is not particularly limited, and a dye having a desired photoabsorption band and absorption spectrum can be appropriately selected according to performance required as a photoelectric conversion device. The dye may be any of a water soluble dye, a non-water soluble dye, and an oil soluble dye. Specific examples of the dye include a xanthene-based dye such as eosin Y, a coumarin-based dye, a triphenylmethane-based dye, a cyanine-based dye, a merocyanine-based dye, a phthalocyanine-based dye, a naphthalocyanine-based dye, a porphyrin-based dye, a polypyridine metal complex dye, a ruthenium bipyridinium-based dye, an azo dye, a quinone-based dye, a quinonimine-based dye, a quinacridone-based dye, a squarium-based dye, a perylene-based dye, an indigo-based dye, an oxonol-based dye, a polymethine-based dye, and a riboflavin-based dye, though the dye is not particularly limited to these examples. Note that they may be used singly or in combination. From a viewpoint of increasing a dye carrying amount, the dye preferably has an adsorptive group that interacts with a metal oxide. Specific examples of the adsorptive group include a carboxyl group, a sulfonic group, and a phosphoric group, though the adsorptive group is not limited to these examples.

Examples of a method for carrying the dye by the metal oxide layer include a method of immersing the metal oxide layer in a solution containing the dye and a method of coating the metal oxide layer with a solution containing the dye. A solvent of the dye containing solution used here can be appropriately selected from known solvents such as water, an ethanol-based solvent, a nitrile-based solvent, and a ketone-based solvent, according to solubility, compatibility, or the like of the dye used.

Here, in the case of forming the metal oxide layer by cathode electrolytic deposition, by using the electrolyte solution containing the metal salt and the dye, the formation of the metal oxide layer and the carrying of the dye can be simultaneously performed to thereby enable the dye-supported metal oxide layer 13 to be promptly formed. An electrolysis condition can be appropriately set based on characteristics of the materials used, according to an ordinary method. For example, when forming the dye-supported metal oxide layer 13 made of ZnO and the dye, it is preferable that a reduction electrolysis potential is about -0.8 to -1.2 V (vs. Ag/AgCl), a pH is about 4 to 9, and a bath temperature of the electrolyte solution is about 0 to 100°C. Moreover, it is preferable that a metal ion concentration in the electrolyte solution is about 0.5 to 100 mM, and a dye concentration in the electrolyte solution is about 50 to 500 µM. In addition, in order to further enhance the photoelectric conversion characteristics, the dye carried by the dye-supported metal oxide layer 13 may be desorbed and another dye re-adsorbed.

Note that the working electrode 11 may have an intermediate layer between the conductive surface 12a of the base 12 and the dye-supported metal oxide layer 13. Preferably, the intermediate layer has translucency, and further has conductivity. A material of the intermediate layer is not particularly limited. Examples of the material include zinc oxide, and the metal oxides described with regard to the above-mentioned transparent conductive film 12a. A formation method of the intermediate layer is not particularly limited. The intermediate layer can be formed by depositing or accumulating a metal oxide on the conductive surface 12a of the base 12 according to a known technique such as evaporation, CVD, spraying, spin coating, immersion, and electrolytic deposition. A thickness of the intermediate layer is not particularly limited, but is preferably about 0.1 to 5 µm.

The electrolyte sheet 31 in which an electrolyte 33 is retained by a reticulated support member 32 is disposed on the dye-supported metal oxide layer 13. In more detail, the electrolyte sheet 31 is placed in the sealed space defined by the working electrode 11, the counter electrode 21, and the spacer 41 so as to be in contact with the working electrode 11 and the counter electrode 21.

The reticulated support member 32 is a structure in which reticulations (pores) of about several µm to several hundred µm are formed by arranging fibers substantially in a lattice. Specific examples of the reticulated support member 32 include a mesh sheet, a mesh filter, and a screen mesh. The reticulated support member 32 may be knotted or knotless. Moreover, the fibers constituting the reticulations may be integrated together to form flat mesh cloth. A reticulation shape of the reticulated support member 32 is not particularly limited, and may be any shape such as a square, a triangle, a rhombus, a polygon, a circle, an ellipse, and an indeterminate shape.

A material forming the reticulated support member 32 is not particularly limited. Examples of the material include: a variety of metals or alloys; a polymer fiber such as polytetrafluoroethylene, polyamide, polyimide, polyvinyl chloride, polypropylene, polyester, polyethylene, nylon, and silk; and a glass fiber. In consideration of a corrosion resistance, a metal or an alloy such as Pt, Mo, Ti, and C, a polymer fiber such as polytetrafluoroethylene and polyimide, a glass fiber, and the like are preferable.

The number of fibers (reticulation number), wire diameter, opening ratio (aperture ratio), and the like of the reticulated support member 32 are not particularly limited, so long as the reticulated support member 32 is capable of retaining the electrolyte 33. For example, a mesh sheet with an aperture of about 10 to 2000 µm, a wire diameter of about 10 to 1000 µm, and an opening ratio of about 10 to 40% is commercially available. In such a reticulated support member 32, it is preferable that the electrolyte 33 is retained at least in the reticulations of the reticulated support member 32. The electrolyte 33 may also be retained on a front surface and a back surface of the reticulated support member 32 in film form. Though part or most of the reticulations of the reticulated support member 32 can be lost or deformed due to discoloration, decomposition, and the like caused by contact with the electrolyte 33 and degradation with time, such an aspect is also within the scope of the present invention and so is obviously included in the present invention.

A thickness of the reticulated support member 32 is not particularly limited, and can be appropriately set according to an electrode distance between the working electrode 11 and the counter electrode 21 and a desired filling amount of the electrolyte 33. When the thickness of the reticulated support member 32 is larger than the electrode distance, the reticulated support member 32 can be enclosed between the working electrode 11 and the counter electrode 21 by pressing. When the thickness of the reticulated support member 32 is smaller than the electrode distance, the reticulated support member 32 can be enclosed between the working electrode 11 and the counter electrode 21, with the electrolyte 33 being deposited on the front surface and the back surface of the reticulated support member 32 in film form. Typically, the thickness of the reticulated support member 32 is preferably 10 to 500 µm, and more preferably 30 to 400 µm.

From a viewpoint of enhancing the retentivity of the electrolyte 33, it is preferable that an adhesive is added to at least one part of the reticulated support member 32. Specific examples of the adhesive include adhesives containing acrylic-based, olefin-based, urethane-based, epoxy-based, vinyl chloride-based, cyanoacrylate-based, silicone-based, and polyimide-based monomers, polymers, and the like, though the adhesive is not particularly limited to these examples.

The electrolyte 33 retained by the reticulated support member 32 is not particularly limited. In consideration of conductivity and economic efficiency, however, a quasi-solid electrolyte containing a conductive carbon material is preferable. The quasi-solid electrolyte containing the conductive carbon material typically has high viscosity, so that the functional effects of the present invention can be effectively achieved.

Though not particularly limited, the conductive carbon material contained in the quasi-solid electrolyte is, for example, carbon black, carbon fiber, carbon nanotube, graphite, activated carbon, fullerene, and the like. Note that they may be used singly or in combination. In consideration of conductivity and economic efficiency, carbon black, carbon fiber, graphite, and carbon nanotube are preferable, and carbon black is more preferable. Specific examples of carbon black include ketjen black, acetylene black, and oil furnace black. The content of the conductive carbon material in the total quasi-solid electrolyte is preferably 5 to 80 wt% and more preferably 20 to 60 wt%.

The quasi-solid electrolyte preferably contains a redox agent. Though the redox agent is not particularly limited, specific examples of the redox agent include a combination of iodine and iodide (e.g., metal iodide, quarternary ammonium iodide, or the like), a combination of bromine and bromide (e.g., metal bromide, quarternary ammonium bromide, or the like), and a combination of chlorine and a chlorine compound (e.g., metal chloride, quarternary ammonium chloride, or the like). Especially, iodine tends to provide high photoelectric conversion efficiency. The content of the redox agent in the total quasi-solid electrolyte is preferably 1 × 10⁻⁴ to 1 × 10⁻² mol/g, and more preferably 1 × 10⁻³ to 1 × 10⁻² mol/g.

The quasi-solid electrolyte may contain a solvent, so long as the quasi-solid property can be maintained. Though the solvent is not particularly limited, specific examples of the solvent include: nitriles such as acetonitrile, methoxyacetonitrile, propionitrile, 3-methoxypropionitrile, butoxypropionitrile, benzonitrile, and nitrile valerate; carbonates such as dimethyl carbonate, diethyl carbonate, methylethyl carbonate, ethylene carbonate, and propylene carbonate; monohydric alcohols such as ethylene glycol monoalkyl ether, propylene glycol monoalkyl ether, polyethylene glycol monoalkyl ether, and polypropylene glycol monoalkyl ether; polyhydric alcohols such as ethylene glycol, propylene glycol, polyethylene glycol, polypropylene glycol, and glycerin; esters such as ethyl acetate and methyl propionate; ethers such as dioxane, ethylene glycol dialkyl ether, propylene glycol dialkyl ether, polyethylene glycol dialkyl ether, polypropylene glycol dialkyl ether, 1,2-dimethoxyethane, 1,3-dioxosilane, tetrahydrofuran, and 2-methyl-tetrahydrofuran; lactones such as γ-butyrolactone, α-methyl-γ-butyrolactone, β-methyl-γ-butyrolactone, γ-valerolactone, and 3-methyl-γ-valerolactone; sulfoxides such as dimethyl sulfoxide; heterocyclic compounds such as 3-methyl-2-oxazolidinone and 2-methylpyrrolidone; and aprotic polar compounds such as sulfolane, dimethyl sulfoxide, and dimethyl formamide. Note that they may be used singly or in combination. The content of the solvent in the total quasi-solid electrolyte is preferably 1 to 80 wt%.

The quasi-solid electrolyte may contain a fire-resistant, low-volatile ionic liquid, so long as the quasi-solid property can be maintained. For example, an imidazolium-based iodine compound such as methylpropyl imidazolium iodide and methylbutyl imidazolium iodide is widely used as the ionic liquid. However, the ionic liquid is not particularly limited to such, and a known ionic liquid may be used. Examples of the ionic liquid include an ionic liquid such as imidazolium-based, pyridine-based, alicyclic amine-based, aliphatic amine-based, and azonium amine-based, and an ionic liquid described in European Patent No. 718288, WO 95/18456 Pamphlet, J. Electrochem. Soc. Vol.143, No.10, p.3099 (1996), and Inorg. Chem. Vol.35, p.1168 (1996). Note that they may be used singly or in combination. The content of the ionic liquid in the total quasi-solid electrolyte is preferably 1 to 80 wt%.

The quasi-solid electrolyte may contain particles. Specific examples of the particles include TiO₂, SnO₂, SiO₂, ZnO, Nb₂O₅, In₂O₃, ZrO₂, Al₂O₃, WO₃, SrTiO₃, Ta₂O₅, La₂O₃, Y₂O₃, Ho₂O₃, Bi₂O₃, CeO₂, and C. Note that they may be used singly or in combination. An average particle diameter of the particles is not particularly limited, but is preferably about 2 to 1000 nm. By containing the particles in the quasi-solid electrolyte, not only ion diffusion of iodine in the electrolyte can be made but also a conductive path by a Grotthuss mechanism can be formed on a composite particle surface, which contributes to improved characteristics.

The quasi-solid electrolyte may contain various additives according to required performance. Additives typically used in batteries, solar cells, and the like can be appropriately used. Specific examples of the additives include: a p-type conductive polymer such as polyaniline, polyacetylene, polypyrrole, polythiophene, polyphenylene, polyphenylene vinylene, and a derivative of any of them; a molten salt composed of a combination of a halide ion and an imidazolium ion, a pyridinium ion, a triazolium ion, or a derivative of any of them; a gellant; an oil gellant; a dispersant; a surfactant; and a stabilizer.

Preparation of the quasi-solid electrolyte can be performed according to an ordinary method. For example, by mixing or kneading the conductive carbon material with small amounts of the solvent, the ionic liquid, the redox agent, and the various additives that are added according to need, it is possible to prepare a uniform quasi-solid electrolyte.

The counter electrode 21 includes a base 22 having a conductive surface 22a. A known structure can be appropriately adopted as the base 22 and the conductive surface 22a, as with the above-mentioned base 12 and conductive surface 12a. For example, the base 12 having conductivity or the base 12 on which a conductive film is formed is applicable. Moreover, a metal thin film such as platinum, gold, silver, copper, aluminum, indium, molybdenum, and titanium may be formed on the base 12 or the conductive film of the base 12.

The working electrode 11 and the counter electrode 21 are disposed so as to face each other via the spacer 41, and also bonded together via the electrolyte sheet 31, thereby forming a cell having a predetermined electrode distance.

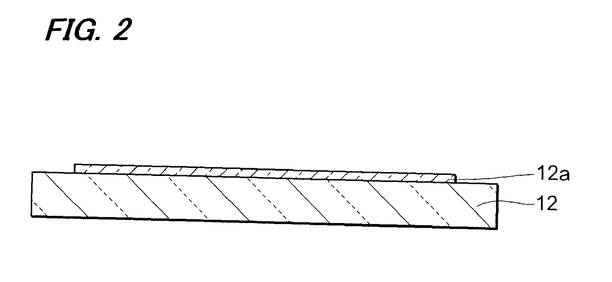

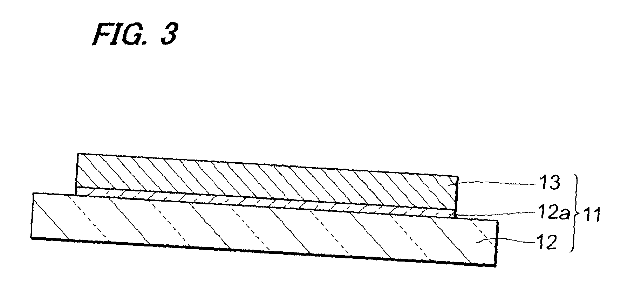

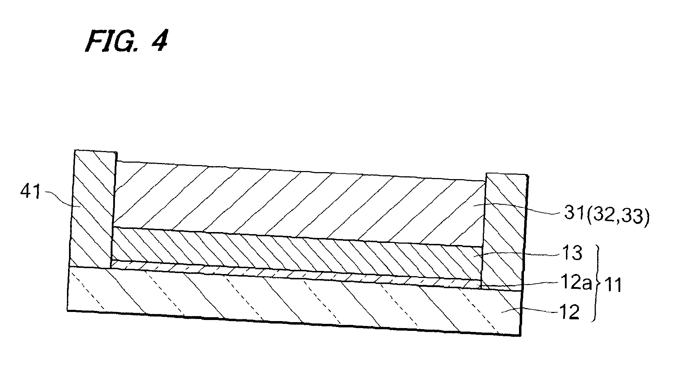

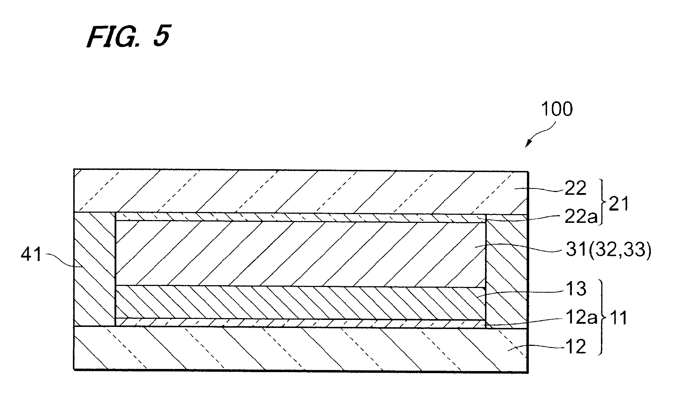

A manufacturing method of the photoelectric conversion device 100 in this embodiment is described below. FIGS. 2 to 5 are process views showing states of manufacturing the photoelectric conversion device 100 in this embodiment. First, the base 12 having the conductive surface 12a is prepared (see FIG. 2), and the dye-supported metal oxide layer 13 is formed on the conductive surface 12a to thereby prepare the working electrode 11 (see FIG. 3). After this, the electrolyte sheet 31 is placed on the dye-supported metal oxide layer 13 of the working electrode 11, and also the spacer 41 is placed on the working electrode 11 (see FIG. 4). The working electrode 11 and the counter electrode 21 are then bonded and sealed together via the electrolyte sheet 31, as a result of which the photoelectric conversion device 100 is obtained (see FIG. 5).

Prior to the placement of the electrolyte sheet 31 on the dye-supported metal oxide layer 13 of the working electrode 11, another electrolyte composition may be added to the dye-supported metal oxide layer 13. For example, the dye-supported metal oxide layer 13 may be immersed in an electrolyte solution, or the dye-supported metal oxide layer 13 may be coated with a low viscosity electrolyte under a condition of not applying an excess pressure. This enables the electrolyte to be retained well into the dye-supported metal oxide layer 13, and also the adhesiveness and the contact area between the dye-supported metal oxide layer 13 and the electrolyte sheet 31 to be enhanced. As a result, the photoelectric conversion efficiency can be further improved.

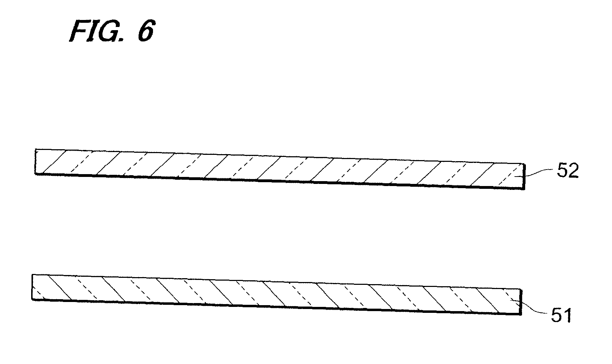

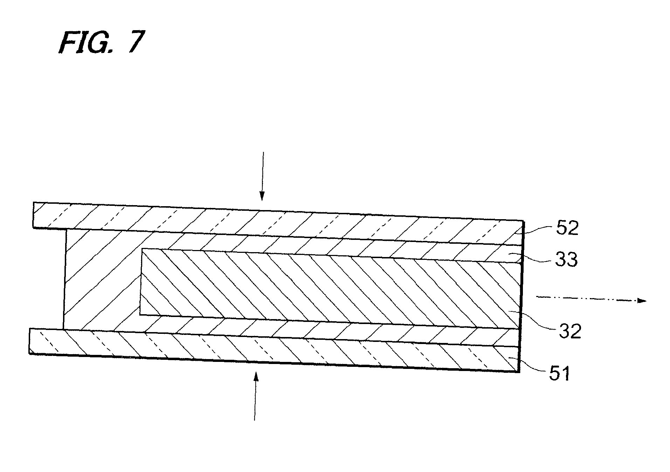

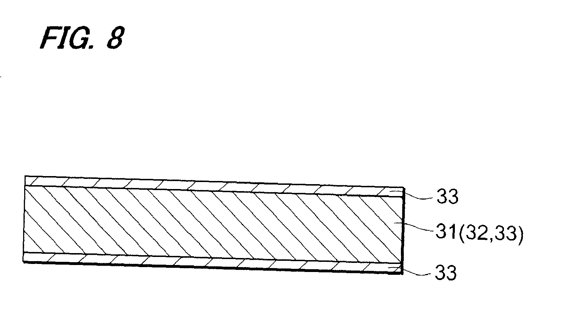

FIGS. 6 to 8 are process views showing a manufacturing method of the electrolyte sheet 31. In this example, one pair of substrates 51 and 52 are prepared (see FIG. 6), and the reticulated support member 32 is sandwiched together with the electrolyte 33 between the substrates 51 and 52 (see FIG. 7), thereby manufacturing the electrolyte sheet 31 (see FIG. 8). By sandwiching the reticulated support member 32 together with the electrolyte 33 between the substrates 51 and 52 in this way, the electrolyte 33 is retained in the reticulations of the reticulated support member 32, so that the flat-surface electrolyte sheet 31 of a uniform thickness that is highly filled with the electrolyte 33 can be manufactured easily at low cost. Here, by adjusting the viscosity of the electrolyte 33 and the pressing condition between the substrates 51 and 52, the electrolyte sheet 31 having the layer of the electrolyte 33 formed not only in the reticulations of the reticulated support member 32 but also on the front surface and/or the back surface of the reticulated support member 32 can equally be manufactured (see FIG. 8). Moreover, by sandwiching the reticulated support member 32 together with the electrolyte 33 between the substrates 51 and 52 and pulling out the reticulated support member 32 in a state of applying a predetermined pressure to the substrates 51 and 52 according to need, the electrolyte sheet 31 that is more highly filled with the electrolyte 33 can be obtained easily at low cost (see FIG. 7).

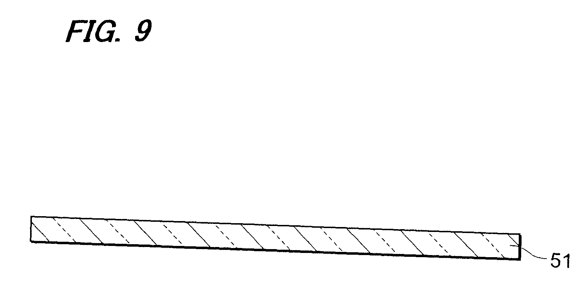

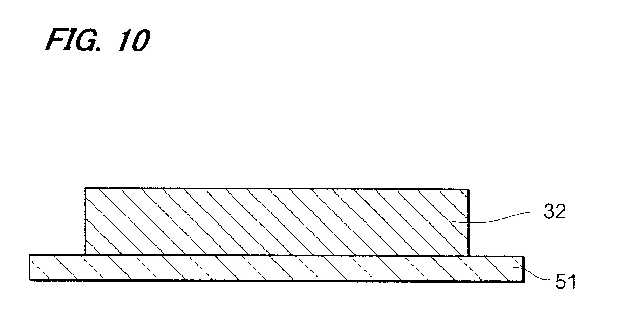

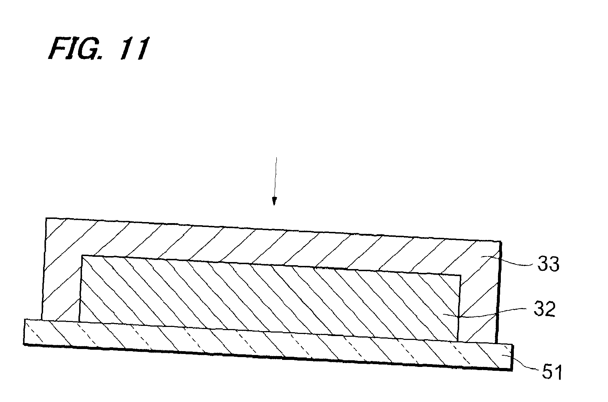

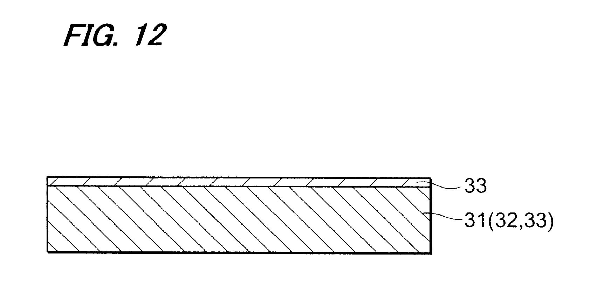

FIGS. 9 to 12 are process views showing another manufacturing method of the electrolyte sheet 31. In this example, the substrate 51 is prepared (see FIG. 9), the reticulated support member 32 is placed on the substrate 51 (see FIG. 10), and the electrolyte 33 is further placed and a pressing process such as squeegeeing is performed (see FIG. 11), thereby manufacturing the electrolyte sheet 31 (see FIG. 12). By pressing the reticulated support member 32 together with the electrolyte 33 on the substrate 51 in this way, the electrolyte 33 is retained in the reticulations of the reticulated support member 32. Thus, the flat-surface electrolyte sheet 31 of a uniform thickness that is highly filled with the electrolyte 33 can be manufactured easily at low cost.

The flat-surface electrolyte sheet 31 of a uniform thickness that is highly filled with the electrolyte 33 can also be manufactured easily at low cost by a method other than the above-mentioned methods, such as a method of preparing a liquid composition in which the electrolyte 33 is diluted with a solvent in advance, immersing the reticulated support member 32 in this liquid composition to cause the electrolyte composition to be retained in the reticulations of the reticulated support member 32, and volatilizing the solvent in this state.

As the above-mentioned substrates 51 and 52, known substrates can be used with no particular limitation. The substrates 51 and 52 are preferably flat-surface substrates having poor adhesiveness to the reticulated support member 32 and the electrolyte 33. Specific examples include a glass substrate, a plastic substrate, a metal or alloy substrate, and a laminate of these substrates, though the substrates 51 and 52 are not particularly limited to these examples.

### [Examples]

The following describes the present invention in detail by way of Examples and Comparative Examples, though the present invention is not limited to such.

(Example 1)
First, a transparent glass substrate (TCO: manufactured by Asahi Glass Fabritec Co., Ltd.) having a transparent conductive film of SnO doped with fluorine was prepared, and a commercially available titanium oxide paste (18 nm in particle diameter) was screen printed on the transparent conductive film. After drying the paste by heating at 60°C for 10 minutes, firing was performed at 450°C for 30 minutes, thereby forming a titanium oxide thin film of about 3 µm in thickness. Next, an N719 dye ethanol solution (dye concentration: 3 × 10⁻⁴ M) was prepared as a dye adsorption solution, and the above-mentioned titanium oxide thin film was immersed in this dye adsorption solution at a room temperature for 8 hours to perform a dye adsorption process. After this, cleaning and vacuum drying were performed by ethanol to form a dye-supported metal oxide layer. Thus, a working electrode was obtained.

Following this, commercially available carbon black (315 m²/g in N₂ specific surface area) as a conductive carbon material was mixed and kneaded in a methoxypropionitrile solution oftetrabutylammonium iodide (0.5 M) to prepare an electrolyte (quasi-solid electrolyte). The content of the conductive carbon material in the electrolyte was 30 wt%.

A polypropylene mesh (manufactured by Clever Co., Ltd., 105 µm in aperture, 106 µm in wire diameter, 121 in reticulation number, 25% in aperture ratio, and 230 µm in thickness per inch square) was prepared as a reticulated support member, and this polypropylene mesh was sandwiched together with the above-mentioned electrolyte between one pair of glass substrates and pressed, and the polypropylene mesh was pull out from between the pair of glass substrates in this state. Thus, an electrolyte sheet (about 240 µm in thickness) of Example 1 was manufactured.

Meanwhile, a transparent glass substrate (TCO: manufactured by Asahi Glass Fabritec Co., Ltd.) having a transparent conductive film of SnO doped with fluorine was used as a counter electrode, and the counter electrode and the above-mentioned working electrode were bonded to the electrolyte sheet of Example 1 and simply sealed using a spacer (about 250 µm in thickness). As a result, a photoelectric conversion device (dye-sensitized solar cell) of Example 1 having a substantially same structure as in FIG. 1 was obtained. Here, a total of five photoelectric conversion devices were obtained by repeatedly performing the same operation.

(Example 2)
The same processing as Example 1 was performed except that a glass fiber mesh (manufactured by Clever Co., Ltd., 16 in reticulation number, about 1 mm in aperture, and 230 µm in thickness per inch square) was used, thereby manufacturing an electrolyte sheet (about 240 µm in thickness) of Example 2. The same processing as Example 1 was performed except that the electrolyte sheet of Example 2 was used, thereby obtaining a total of five photoelectric conversion devices of Example 2.

(Comparative Example 1)
The same processing as Example 1 was performed except that a dye-supported metal oxide layer was coated with an electrolyte without using an electrolyte sheet (reticulated support member), thereby obtaining a total of five photoelectric conversion devices of Comparative Example 1. In Comparative Example 1, since a uniform thickness electrolyte layer cannot be formed merely by applying the electrolyte onto the dye-supported metal oxide layer, a pressing process using a squeegee was performed to make the thickness as uniform as possible.

The photoelectric conversion efficiency (η: %) was measured using a solar simulator of AM-1.5 (1000 W/m²), as the battery characteristics of the photoelectric conversion devices of Examples 1 and 2 and Comparative Example 1 obtained as mentioned earlier. Note that the photoelectric conversion efficiency (η: %) is expressed as a percentage by dividing a maximum output, which is a product of a voltage and a current obtained by sweeping a voltage of a photoelectric conversion device by a source meter and measuring a response current, by a light intensity per cm² and multiplying a result of the division by 100. The photoelectric conversion efficiency (η: %) is defined as ((maximum output)/(light intensity per cm²)) × 100. Evaluation results are shown in Table 1.

**[Table 1]**

| | Example 1 | Example 2 | Comparative Example 1 |
|---|---|---|---|
| Reticulated support member | Polypropylene | Glass fiber | None |
| No.1 | 2.54 | 2.05 | 1.46 |
| No.2 | 2.48 | 2.04 | 0.77 |
| No.3 | 2.26 | 1.98 | 1.10 |
| No.4 | 2.30 | 1.95 | 0.24 |
| No.5 | 2.38 | 2.00 | 1.07 |
| Mean value | 2.39 | 2.00 | 0.93 |

From Table 1, it has been confirmed that the photoelectric conversion devices of Examples 1 and 2 have especially excellent photoelectric conversion characteristics as compared with the photoelectric conversion device of Comparative Example 1. It has also been confirmed that the photoelectric conversion devices of Examples 1 and 2 have excellent reliability without wide performance variations among products, as compared with the photoelectric conversion device of Comparative Example 1. The improvement in photoelectric conversion characteristics and the decrease in performance variations among products can be attributed to the prevention of damage to the metal oxide layer as a result of omitting squeegeeing, and also to the increase in contact area and adhesiveness between the electrolyte layer and each of the dye-supported metal oxide layer and the counter electrode.

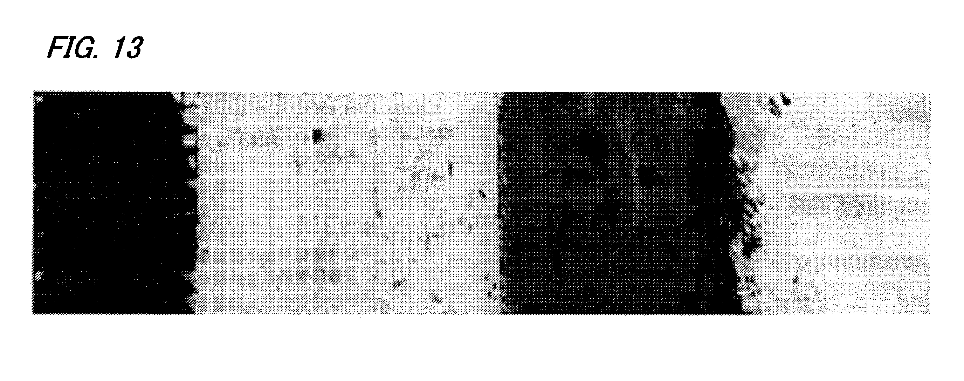

FIG. 13 is a plan view photograph showing the electrolyte sheets and the reticulated support members of Examples 1 and 2. In FIG. 13, the electrolyte sheet of Example 1, the reticulated support member of Example 1, the electrolyte sheet of Example 2, and the reticulated support member of Example 2 are shown from left to right. As is clear from FIG. 13, the electrolyte sheets of Examples 1 and 2 have the electrolyte retained in the reticulations of the reticulated support member.

As noted earlier, the present invention is not limited to the above embodiment and examples, and can appropriately be modified within the scope of the present invention.

As described above, the present invention is capable of realizing a high-quality photoelectric conversion device with excellent productivity, economic efficiency, and versatility, and so can be widely and effectively used in electronic and electrical materials and electronic and electrical devices having photoelectric conversion devices, and various apparatuses, facilities, systems, and the like including such electronic and electrical materials and electronic and electrical devices.
The present application is based on Japanese priority applications No. <priority app number> filed on <priority app date> and No. <priority app number> filed on <priority app date>, the entire contents of which are hereby incorporated by reference.

### DESCRIPTION OF NUMERICAL REFERENCES

11: working electrode
12: base
12a: conductive surface
13: dye-supported metal oxide layer
21: counter electrode
31: electrolyte sheet
32: reticulated support member
33: electrolyte
41: spacer
51, 52: substrate
100: photoelectric conversion device

## Claims

1. A manufacturing method of a photoelectric conversion device comprising a working electrode having a dye-supported metal oxide layer, a counter electrode disposed so as to face the working electrode, and an electrolyte layer enclosed between the working electrode and the counter electrode, the manufacturing method comprising:
a step of preparing an electrolyte sheet in which an electrolyte is retained by a reticulated support member; and
a step of enclosing the electrolyte sheet between the working electrode and the counter electrode.

2. The manufacturing method of the photoelectric conversion device according to Claim 1,
wherein the electrolyte is retained at least in reticulations of the reticulated support member.

3. The manufacturing method of the photoelectric conversion device according to Claim 1 or 2,
wherein an adhesive is added to at least one part of the reticulated support member.

4. The manufacturing method of the photoelectric conversion device according to any one of Claims 1 to 3,
wherein in the step of preparing the electrolyte sheet, the electrolyte sheet in which the electrolyte is retained by the reticulated support member is formed by sandwiching the reticulated support member together with the electrolyte between one pair of substrates.

5. The manufacturing method of the photoelectric conversion device according to any one of Claims 1 to 3,
wherein in the step of preparing the electrolyte sheet, the electrolyte sheet in which the electrolyte is retained by the reticulated support member is formed by sandwiching the reticulated support member together with the electrolyte between one pair of substrates and then pulling out the reticulated support member from between the pair of substrates.

6. The manufacturing method of the photoelectric conversion device according to any one of Claims 1 to 3,
wherein in the step of preparing the electrolyte sheet, the electrolyte sheet in which the electrolyte is retained by the reticulated support member is formed by pressing the electrolyte together with the reticulated support member on a substrate.

7. A photoelectric conversion device comprising:
a working electrode having a dye-supported metal oxide layer;
a counter electrode disposed so as to face the working electrode; and
an electrolyte layer enclosed between the working electrode and the counter electrode,
wherein the electrolyte layer comprises an electrolyte sheet in which an electrolyte is retained by a reticulated support member.
